# EUROPÄISCHE PATENTSCHRIFT

(11) **EP 1 252 341 B1**
(45) Veröffentlichungstag und Bekanntmachung des Hinweises auf die Patenterteilung: **09.11.2005**
(21) Anmeldenummer: 01946898.2
(22) Anmeldetag: 18.01.2001
(51) Int. Cl.: C21B 3/06, C21C 5/36, C04B 5/06, C22B 7/04

(54) **VERFAHREN ZUM HERSTELLEN VON PUZZOLANISCHEN ZUMAHLSTOFFEN FÜR DIE ZEMENTINDUSTRIE AUS STAHLSCHLACKEN UNTER VERWENDUNG EINES REDUZIERENDEN METALLBADES**
METHOD FOR PRODUCING POZZOLANIC BINDERS FOR THE CEMENT INDUSTRY FROM STEEL SLAGS USING A REDUCTION METAL BATH
PROCEDE DE PRODUCTION DE MATIERES DE BROYAGE PUZZOLANIQUES DESTINEES A L'INDUSTRIE DU CIMENT, A PARTIR DE SCORIES D'ACIER, PAR UTILISATION D'UN BAIN METALLIQUE DE REDUCTION

(30) Priorität: 28.01.2000 AT 622000 U
(43) Veröffentlichungstag der Anmeldung: 30.10.2002
(73) Patentinhaber: Holcim Ltd., 8645 Jona (CH)
(72) Erfinder: EDLINGER, Alfred, A-6780 Bartholomäberg (AT)
(74) Vertreter: Haffner, Thomas M.
(86) Internationale Anmeldenummer: PCT/AT2001/000013
(87) Internationale Veröffentlichungsnummer: WO 2001/055457

(56) Entgegenhaltungen:
- WO-A-95/07365
- WO-A-96/34989
- DE-A- 2 307 237
- DATABASE WPI Section Ch, Week 199551 Derwent Publications Ltd., London, GB; Class M24, AN 1995-401329 XP002166992 & JP 07 278633 A (NIPPON STEEL CORP), 24. Oktober 1995 (1995-10-24)

## Beschreibung

Die Erfindung bezieht sich auf ein Verfahren zum Herstellen von puzzolanischen oder hydraulischen Zumahlstoffen für die Zementindustrie aus basischen oxidischen Schlacken, insbesondere Stahlschlacken, unter Verwendung eines Metallbades zum Reduzieren von Metalloxiden der Schlacken.

Aus der EP 666 930 B1 ist bereits ein Verfahren bekanntgeworden, bei welchem Stahlschlacken unter Verwendung von Roheisen und insbesondere des im Roheisen vorhandenen Kohlenstoffgehaltes reduziert wurden, wodurch zum einen ein Frischen des Roheisenbades bewirkt wird und gleichzeitig Eisenoxid aus der Stahlschlacke zu Eisen reduziert wird und in das Metallbad gelangt. Oxidische Schlacken und insbesondere Stahlwerksschlacken weisen nun je nach ihrem Metalloxidgehalt und ihrer Basizität eine mehr oder minder hohe Viskosität auf, wodurch bei vergleichsweise hohen Temperaturen gearbeitet werden muß, um eine entsprechend dünnflüssige Schlacke aufrecht zu erhalten. Wenn derartige Schlacken darüberhinaus im Hinblick auf eine zementtechnologisch interessante Zusammensetzung durch entsprechende Korrekturstoffe angepaßt werden, führt das häufig zu Schlacken, welche bei üblichen Temperaturen aufgrund der hohen CO-Bildung aus dem Badkohlenstoff zu verstärktem Schäumen neigen. Wenn derartig auftretende Schäume stabil sind, führt dies zu einem verminderten Stoffaustausch zwischen Metall und Schlacke und damit zu einer deutlich verringerten Reduktionsrate, wodurch die Behandlungszeit wesentlich verlängert wird. Wenn gleichzeitig mit relativ hohem Kohlenstoffgehalt des Metallbades gearbeitet wird, kann dies zu besonders heftigen Reaktionen in der Grenzfläche führen, welche ein starkes Schäumen und auch einen unerwünschten Schlackenauswurf bewirken können.

Weiters ist aus der DE 2 307 237 ein Verfahren zur Behandlung von metallurgischen Schlacken bekannt geworden, bei welchem die Schlacken im flüssigen Zustand einer Reduktionsbehandlung mittels im festen oder flüssigen Zustand befindliche Reduktionsmittel bei gesteuerter Wärmezufuhr unterworfen werden, um einen vorbestimmten Viskositätsgrad der Schlacken zu erzielen. Aus der WO 96/34989 ist ein Verfahren zur Herstellung von hydraulischen Bindemitteln und/oder Legierungen bekannt geworden, bei welchem flüssige Stahlschlacke mit sauren Additiven zur Absenkung der Viskosität versetzt wird, worauf Stahl aus der flüssigen Schlacke sedimentiert wird und die verbleibende Schlacke einer zweistufigen Reduktion unterworfen wird.

Die Erfindung zielt nun darauf ab, die anfängliche Reaktionsrate und die Behandlungszeit beim Aufarbeiten derartiger basischer oxidischer Schlacken herabzusetzen und gleichzeitig bei geringerem Temperaturniveau eine sichere und rasche Umsetzung und insbesondere Reduktion von Metalloxiden in der Schlacke zu bewirken. Zur Lösung dieser Aufgabe besteht das erfindungsgemäße Verfahren im wesentlichen darin, daß die Basizität der flüssigen Schlacken durch Zusatz von sauren Additiven, wie z.B. Quarzsand und/oder Hochofenschlacke und/oder SiO₂-hältige Korrekturstoffe, vor der Reduktion auf einen Wert eingestellt wird, welcher 0,1 bis 0,5 unter dem Basizitätswert (CaO/SiO₂) der Zielschlacke liegt und daß die Basizität der Schlacken am oder nahe dem Ende der Reduktionsphase durch Zusatz von gebranntem Kalk und/oder CaO-hältigen Korrekturstoffen auf die gewünschte Zielbasizität zwischen 1,1 und 1,5 eingestellt wird. Durch die Absenkung der Basizität der flüssigen Schlacken auf relativ geringe Werte und insbesondere geringere Werte als sie in der Folge für eine zementtechnologische Verwertung wünschenswert erscheinen, kann unmittelbar eine auch bei tieferen Temperaturen dünnflüssige Schlacke erzielt werden, welche nur geringe Neigung zum Schäumen aufweist. Aufgrund der Absenkung der Basizität und der damit verbundenen Erniedrigung der Viskosität in Abhängigkeit vom Temperaturniveau ergibt sich eine deutlich höhere Reduktionsrate und damit eine raschere Umsetzung, bei welcher insbesondere Eisen- und Manganoxide rasch zu metallischem Eisen und metallischem Mangan reduziert werden. Ebenso werden Oxide von Chrom, Nickel, Vanadium und anderen Metallen reduziert. Mit der Abnahme des Metalloxidgehaltes verringert sich naturgemäß der Kohlenstoffumsatz des Badkohlenstoffes zu Kohlenmonoxid und Kohlendioxid, sodaß die Gefahr eines Schäumens der Schlacke wesentlich zurückgeht. Wenn entsprechende Mengen an Al₂O₃ zugegesetzt werden, verringert sich die Viskosität zusätzlich und es genügt eine geringere Absenkung der Basizität zur Erzielung der gewünschten Reaktionsrate. durch Zusatz von gebranntem Kalk und/oder LaO-kältigen korrekturstoffen

Im Rahmen des erfindungsgemäßen Verfahrens wird in der Folge so vorgegangen, daß die Basizität der Schlacken am oder nahe dem Ende der Reduktionsphase, durch Zusatz von gebranntem Kalk und/oder CaO-hältigen Korrekturstoffen auf die gewünschte Zielbasizität zwischen 1,1 und 1,5 eingestellt wird. Aufgrund der verringerten Kohlenstoffumsätze und der auf diese Weise geringeren Neigung zur Schaumbildung kann somit gegen Ende der Reduktion bereits die zementtechnologisch gewünschte Zielbasizität eingestellt werden, wobei diese Zugabe im Konverter erfolgen kann, in welchem die Reduktion der Stahlschlacken vorgenommen wurde.

Für die Einstellung einer bevorzugten zementtechnologischen Zusammensetzung der Schlacken ist neben der Einstellung einer Zielbasizität auf Werte zwischen 1,1 und 1,5 in der Regel auch eine Anhebung des Al₂O₃-Gehaltes wünschenswert, wobei zu diesem Zwecke beispielsweise Bauxit zugesetzt werden kann. Für eine rasche Umsetzung in der Reduktionsphase ist es vorteilhaft, wenn auch die Al₂O₃-hältigen Korrekturstoffe bereits zu Beginn der Behandlung zugesetzt werden, wobei mit Vorteil so vorgegangen wird, daß Al₂O₃-hältige Korrekturstoffe, wie z.B. Bauxit, zumindest teilweise vor der Reduktion der Schlacken zugesetzt werden. Durch Zusatz einer Teilmenge der für die Einstellung des Al₂O₃-Gehaltes erforderlichen Additive vor der Reduktion wird eine sichere Durchmischung in der Schlacke bei gleichzeitiger Abnahme der Schlackenviskosität während des Reduktionsvorganges sichergestellt, wobei diese Teilmenge zwischen der Hälfte und drei Viertel des benötigten Zusatzes an Al₂O₃-hältigen Additiven bevorzugt betragen kann.

Die Absenkung der Basizität vor der Reduktion auf Werte nahe dem Neutralpunkt bringt auch besondere Vorteile in bezug auf die Standzeiten einer nicht basischen Feuerfestausmauerung mit sich.

Mit Vorteil wird im Rahmen des erfindungsgemäßen Verfahrens so vorgegangen, daß die Zielbasizität ab einem Zeitpunkt angesteuert wird, zu welchem der Metalloxidgehalt und insbesondere die Summe der Eisen-, Mangan-, Chrom-, Nickel- und vanadiumoxidgehalte der Schlacke 3,5 Gew.% unterschreitet. Ab dem Absinken des Metalloxidgehaltes auf Werte von unter 3,5 Gew.% wird, wie bereits erwähnt, aufgrund des wesentlich geringeren Badkohlenstoffumsatzes ein Schäumen bereits weitestgehend vermieden, sodaß bereits ab diesem Zeitpunkt die für die Ansteuerung der Zielbasizität und der Ansteuerung der zementtechnologischen Zusammensetzung erforderlichen Additive zugesetzt werden können, ohne daß dies das Verfahren nachteilig beeinflußt.

Die Erfindung wird nachfolgend anhand eines Ausführungsbeispieles näher erläutert.

### Beispiel 1:

In einem Konverter wurde auf 10 t Roheisen 3 t einer Schlacke mit nachfolgender Zusammensetzung aufgegeben:

| Schlacke | |
|---|---|
| | Gew.% |
| CaO | 45,1 |
| SiO₂ | 15,6 |
| Al₂O₃ | 3,3 |
| MgO | 6,7 |
| TiO₂ | 1,1 |
| FeO | 25,7 |
| MnO | 2,5 |
| | |
| CaO/SiO₂ | 2,9 |

Dem Metallbad wurde während des Reduktionsvorganges Kohlenstoff in Form von Kohlenstoffträgern zugeführt. Durch Einsatz von Kohle und Sauerstoff wurde die erforderliche Temperatur für die Aufrechterhaltung einer flüssigen Schlacke gewährleistet und das erforderliche Reduktionspotential zur Verfügung gestellt. Die Schlackenbasizität wurde durch Einblasen von 770 kg Quarzsand auf einen Wert von 1,1 abgesenkt und 494 kg Bauxit zugesetzt, wobei sich eine Schlacke am Beginn der Schmelzreduktion ausbildete, welche die nachfolgende Zusammensetzung aufwies:

| Schlackenzusammensetzung vor der Schmelzreduktion | |
|---|---|
| | Gew.% |
| CaO | 35,5 |
| SiO₂ | 32,2 |
| Al₂O₃ | 9,4 |
| MgO | 5,5 |
| TiO₂ | 0,4 |
| FeO | 15,4 |
| MnO | 1,6 |
| | |
| CaO/SiO₂ | 1,1 |

Gegen Ende der Reduktionsphase, in welcher insbesondere der FeO-Gehalt von 15,4 Gew.% auf Werte unter 1 % abgesenkt werden konnte und der Manganoxidgehalt im wesentlichen halbiert werden konnte, wurde die gewünschte Schlackenendzusammensetzung durch Hinzufügen von 265 kg gebranntem Kalk und 330 kg Bauxit eingestellt. Der insgesamt relativ tiefe Metalloxidgehalt von etwa 1,7 Gew.% und geringer Badkohlenstoffumsatz zu Kohlenmonoxid und Kohlendioxid gegen Ende der Reduktionsphase verhindert zu diesem Zeitpunkt das Schäumen bis zum Ende der Behandlung. Die Zusammensetzung der Zielschlacke, welche sich durch hervorragende zementtechnologische Eigenschaften auszeichnet, konnte wie folgt erhalten werden:

| Schlackenzusammensetzung nach der Schmelzreduktion | |
|---|---|
| | Gew.% |
| CaO | 44,7 |
| Si02 | 34,5 |
| Al₂O₃ | 14,5 |
| MgO | 4,3 |
| TiO₂ | 0,3 |
| FeO | 0,8 |
| MnO | 0,9 |
| | |
| CaO/SiO₂ | 1,3 |

Insgesamt wurde somit im Rahmen dieses Verfahrens die Schlackenbasizität um einen Wert von 0,2 unter den Wert der Zielbasizität abgesenkt, wodurch ein Schäumen und ein unerwünschter Schlackenauswurf sicher verhindert werden konnte.

### Beispiel 2:

In einem Konverter wurden auf 10 Tonnen Roheisen 4 Tonnen einer Schlacke folgender Zusammensetzung im flüssigen Zustand chargiert:

| Schlacke | |
|---|---|
| | Gew.% |
| CaO | 47,8 |
| SiO₂ | 26,3 |
| Al₂O₃ | 5,9 |
| MgO | 8,9 |
| TiO₂ | 1,3 |
| FeO | 1,7 |
| MnO | 1,4 |
| Cr₂O₃ | 6,7 |
| | |
| CaO/SiO₂ | 1,8 |

Die oben aufgeführte Schlacke wurde durch Einsatz von Kohle und Sauerstoff einem Schmelzreduktionsprozeß unterworfen.

Vorher wurde jedoch die Chemie der Schlacke so verändert, daß die Viskosität erniedrigt wird. Dies erfolgte durch Zugabe von 867 kg Quarzsand und 980 kg Bauxit.

Gleichzeitig ergibt sich bereits durch den Kontakt der metalloxidhaltigen Schlacke mit dem kohlenstoffhaltigen Eisenbad eine Reduktionsreaktion.

Beide Effekte (Einstellung von Basizität und Al₂O₃-Gehalt sowie die einsetzende Reduktion) führten zu folgender Zusammensetzung vor Beginn der eigentlichen Schmelzreduktionsbehandlung:

| Schlackenzusammensetzung vor der Schmelzreduktion | |
|---|---|
| | Gew.% |
| CaO | 35,6 |
| SiO₂ | 35,8 |
| Al₂O₃ | 14,1 |
| MgO | 6,7 |
| TiO₂ | 1,4 |
| FeO | 1,3 |
| MnO | 1,0 |
| Cr₂O₃ | 4,1 |
| | |
| CaO/SiO₂ | 1,0 |

Nach Ende der Reduktionsphase wurde die gewünschte Schlackenendzusammensetzung durch Hinzufügen von 828 kg gebranntem Kalk und 237 kg Bauxit eingestellt.

Die Zusammensetzung der Endschlacke wurde wie folgt bestimmt:

| Schlackenzusammensetzung nach der Schmelzreduktion | |
|---|---|
| | Gew.% |
| CaO | 45,0 |
| SiO₂ | 31,4 |
| Al₂O₃ | 14,4 |
| MgO | 5,9 |
| TiO₂ | 1,3 |
| FeO | 1,1 |
| MnO | 0,8 |
| Cr₂O₃ | 0,03 |
| | |
| CaO/SiO₂ | 1,4 |

## Patentansprüche

1. Verfahren zum Herstellen von puzzolanischen oder hydraulischen Zumahlstoffen für die Zementindustrie aus basischen oxidischen Schlacken, insbesondere Stahlschlacken, unter Verwendung eines Metallbades zum Reduzieren von Metalloxiden der Schlacken, **dadurch gekennzeichnet, dass** die Basizität der flüssigen Schlacken durch Zusatz von sauren Korrekturstoffen, wie z.B. Quarzsand und/oder Hochofenschlacke und/oder SiO₂-hältige Korrekturstoffe, vor der Reduktion auf einen Wert eingestellt wird, welcher 0,1 bis 0,5 unter dem Basizitätswert (CaO/SiO₂) der Zielschlacke liegt und dass die Basizität der Schlacken am oder nahe dem Ende der Reduktionsphase durch Zusatz von gebranntem Kalk und/oder CaO-hältigen Korrekturstoffen auf die gewünschte Zielbasizität zwischen 1,1 und 1,5 eingestellt wird.

2. Verfahren nach Anspruch 1, **dadurch gekennzeichnet, dass** Al₂O₃-hältige Korrekturstoffe, wie z.B. Bauxit, zumindest teilweise vor der Reduktion der Schlacken zugesetzt werden.

3. Verfahren nach Anspruch 1 oder 2, **dadurch gekennzeichnet, dass** die Zielbasizität ab einem Zeitpunkt angesteuert wird, zu welchem der Metalloxidgehalt und insbesondere die Summe der Eisen-, Mangan- Chrom- und Vanadiumoxidgehalte der Schlacke 3,5 Gew.% unterschreitet.

4. Verfahren nach Anspruch 2, **dadurch gekennzeichnet, dass** die Basizität bei Zusatz von Al₂O₃ zur Erzielung eines Al₂O₃-Gehaltes von 12 bis 15 Gew.% in geringerem Maße abgesenkt wird als bei geringeren Al₂O₃-Gehalten.

## Claims

1. A method for producing puzzolanic or hydraulic grinding additives for the cement industry from basic oxidic slags, particularly steel slags, using a metal bath for reducing metal oxides of the slags, **characterized in that**, by the addition of acidic correctives such as, e.g., quartz sand and/or blast furnace slag and/or SiO₂-containing correctives prior to reducing, the basicity of the liquid slags is adjusted to a value that is by 0.1 to 0.5 below the basicity value (CaO/SiO₂) of the target slag, and that the basicity of the slags, at or toward the end of the reduction phase, is adjusted to the desired target basicity of between 1.1 and 1.5 by the addition of burnt lime and/or CaO-containing correctives.

2. A method according to claim 1, **characterized in that** Al₂O₃-containing correctives such as, e.g., bauxite are added at least partially prior to reducing said slags.

3. A method according to claim 1 or 2, **characterized in that** the target basicity is headed for from a point of time at which the metal oxide content and, in particular, the sum of the iron, manganese, chromium and vanadium oxide contents of the slag falls below 3.5% by weight.

4. A method according to claim 2, **characterized in that** the basicity, upon addition of Al₂O₃ to obtain an Al₂O₃ content of 12 to 15% by weight, is lowered by a smaller degree than at lower Al₂O₃ contents.

## Revendications

1. Procédé pour la fabrication d'additifs broyés pouzzolaniques ou hydrauliques pour l'industrie du ciment à partir de laitiers d'oxydes basiques; en particulier de laitiers d'acier, avec utilisation d'un bain métallique pour réduire les oxydes métalliques des laitiers, **caractérisé en ce que** la basicité des laitiers liquides est réglée avant la réduction par addition de produits de correction acides, comme par exemple du sable quartzeux et/ou du laitier du haut-fourneau et/ou des produits de correction contenant du SiO₂, à une valeur qui se situe entre 0,1 et 0,5 au-dessous de la valeur voulue de basicité (CaO/SiO₂) du laitier et **en ce que** la basicité des laitiers est, à la fin ou à proximité de la fin de la phase de réduction, réglée à la basicité souhaitée, comprise entre 1,1 et 1,5, par addition de chaux calcinée et/ou de produits de correction contenant du CaO.

2. Procédé selon la revendication 1, **caractérisé en ce que** des produits de correction contenant Al₂O₃, comme par exemple la bauxite, sont ajoutés au moins partiellement avant la réduction des laitiers.

3. Procédé selon la revendication 1 ou 2, **caractérisé en ce que** la basicité voulue est ajustée à partir du moment où la teneur en oxydes métalliques et en particulier le total des teneurs en oxydes de fer, de manganèse, de chrome et de vanadium du laitier est inférieure à 3,5 % en poids.

4. Procédé selon la revendication 2, **caractérisé en ce que**, par addition de Al₂O₃ pour obtenir une teneur en Al₂O₃ de 12 à 15 %, en poids, on abaisse la basicité dans une plus faible proportion que dans le cas de teneurs en Al₂O₃ plus faibles.
